# EUROPÄISCHE PATENTSCHRIFT

(11) **EP 1 601 067 B1**
(45) Veröffentlichungstag und Bekanntmachung des Hinweises auf die Patenterteilung: **30.05.2007**
(21) Anmeldenummer: 04012845.6
(22) Anmeldetag: 29.05.2004
(51) Int. Cl.: H01S 3/0941, H01S 3/02

(54) **Befestigungsanordnung für ein Pumpmodul**
Mounting arrangement for a pump module
Arrangement de montage pour module de pompage

(43) Veröffentlichungstag der Anmeldung: 30.11.2005
(73) Patentinhaber: TRUMPF Laser GmbH + Co. KG, 78713 Schramberg (DE)
(72) Erfinder: Liemann, Martin, 78052 Villingen Schwenningen (DE); Schmitz, Christian, 78655 Dunningen (DE); Voss, Andreas, 78713 Schramberg (DE)
(74) Vertreter: Kohler Schmid Möbus

(56) Entgegenhaltungen:
- US-A- 5 475 702
- US-A- 5 546 416
- US-A1- 2004 052 280
- US-B1- 6 266 358
- PATENT ABSTRACTS OF JAPAN Bd. 2000, Nr. 26, 1. Juli 2002 (2002-07-01) -& JP 2001 244537 A (MITSUBISHI ELECTRIC CORP), 7. September 2001 (2001-09-07)

## Beschreibung

Die vorliegende Erfindung betrifft eine Anordnung zur Befestigung mindestens eines Pumpmoduls an einem Träger.

Zum Anregen von Festkörperlasern, insbesondere bei Scheibenlasern, werden zunehmend flüssigkeitsgekühlte Hochleistungsdiodenlaserstacks verwendet. Je nach Ausgangsleistung des Festkörperlasers werden mehrere solcher Diodenstacks benötigt. Da die Stapelhöhe der Diodenlaserstacks aus technischen und wirtschaftlichen Gründen begrenzt ist, werden mehrere Stacks durch ein geeignetes optisches System zusammengeführt und auf den laseraktiven Festkörper abgebildet.

Die Laserdiodenstacks stellen ein Verschleißteil dar und müssen nach Degradation oder bei einem Defekt ausgetauscht werden können. Üblicherweise werden entweder der Laserdiodenstack alleine oder eine gesamte Baugruppe, die den Diodenstack beinhaltet und den Austausch vereinfacht, ausgetauscht. Diese Baugruppe kann ein Gehäuse mit Optik und Elektronik umfassen und wird im Folgenden als Pumpmodul bezeichnet.

Aus DE 197 49 328 A1 ist ein solches Pumpmodul für einen diodengepumpten Stablaser bekannt. Dem Anwender wird hier eine Justage nach dem Wechsel des Pumpmoduls erspart, weil das Gehäuse des Pumpmoduls die definierte Raumlage des Diodenstacks zum Laserstab wieder herstellt. Allerdings muss der Anwender noch weitere für den Betrieb des Lasers notwendige Schnittstellen (Kühlung, Datenübertragung, Stromzuführung) mit Hilfe von geeignetem Werkzeug herstellen. Diese Montageschritte erfordern nicht nur Zeit und erhöhen so die Stillstandszeit des Lasers, sondern auch erhöhte Sachkenntnis, um die erforderlichen Montageschritte richtig ausführen zu können. Des weiteren sind durch die Anzahl der Montageschritte Montagefehler möglich, die zu einem Geräteausfall führen können.

Demgegenüber ist es die Aufgabe der vorliegenden Erfindung, eine Befestigungsanordnung für ein Pumpmodul bereitzustellen, bei der das Pumpmodul mit möglichst wenigen Handgriffen und möglichst ohne Werkzeug einfach befestigt und ausgetauscht werden kann.

Diese Aufgabe wird erfindungsgemäß gelöst durch eine Anordnung zur Befestigung mindestens eines Pumpmoduls, welches auf einer Anlageseite eine Anlagefläche und Anschlüsse aufweist, an einem Träger, welcher auf einer Anlageseite mindestens eine Anlagefläche und Gegenanschlüsse aufweist, wobei eine Halteeinrichtung die Anlagefläche des Pumpmoduls in Anlage an der Anlagefläche des Trägers unter Ausbildung einer Verbindung zwischen Anschlüssen und Gegenanschlüssen hält.

Bevorzugt weist das Pumpmodul an seinem in einer Einschubrichtung vorderen Ende sowohl ein Austrittsfenster oder eine Austrittsöffnung für einen Laserstrahl als auch ein Schwenklager und der Träger ein Gegenschwenklager auf, an dem das Pumpmodul im befestigten Zustand angreift.

Besonders bevorzugt ist das Schwenklager des Pumpmoduls durch ein oder mehrere entgegen der Einschubrichtung offene Lageraussparungen und das Gegenschwenklager des Trägers durch einen oder mehrere Achszapfen gebildet. Um ein seitliches Verschieben des Pumpmoduls verhindern, weisen vorteilhafterweise das Pumpmodul an seinem in Einschubrichtung vorderen Ende einen Vorsprung und der Träger eine entsprechende Aussparung oder umgekehrt auf, wobei Vorsprung und Aussparung im befestigten Zustand des Pumpmoduls ohne seitliches Spiel ineinander greifen.

Vorzugsweise ist das Gegenschwenklager des Trägers in Einschubrichtung und/oder im Abstand zur Anlagefläche des Trägers und/oder um eine Achse rechtwinklig zur Anlagefläche des Trägers verstellbar. Durch diese Maßnahme kann das Gegenschwenklager mit Hilfe eines Referenz-Pumpmoduls auf eine vorbestimmte Position justiert werden. Wesentlich ist dabei, dass der Laserstrahl des befestigten Pumpmoduls in einer räumlich eindeutig definierten Beziehung zum mechanischen Anschlag des Trägers, d.h. zum Gegenschwenklager, orientiert ist. Ein Nachjustieren entfällt, wenn ein Pumpmodul mit gleich orientierten Hauptachsen wie das Referenz-Pumpmodul am Gegenschwenklager anliegt.

In einer vorteilhaften Ausführungsform der Erfindung sind die Anschlüsse und Gegenanschlüsse zur elektrischen Versorgung und/oder zur Kühlmittelversorgung und/oder zur Spülgasversorgung des Pumpmoduls und/oder zur Datenübertragung vorgesehen.

Besonders bevorzugt sind alle zur Versorgung des Pumpmoduls erforderlichen Anschlüsse und Gegenanschlüsse auf den Anlageseiten des Pumpmoduls und des Trägers vorgesehen, so dass alle Schnittstellen beim Einführen oder Entnehmen des Pumpmoduls ohne Hilfsmittel gesteckt bzw. getrennt werden. Dabei sind die Strom-, Kühlmittel-, Spülgas- und Datenanschlüsse so ausgelegt, dass sie keinen Einfluss auf die Justierung des Pumpmoduls haben, da ihre Trennflächen parallel zur Anlagefläche liegen und so keine Vordefinition der Strahlachse des Pumpmoduls erfolgt.

Der Datenaustausch mit dem Pumpmodul erfolgt vorzugsweise über Steckerteile, die am Pumpmodul und/oder am Träger schwimmend gelagert sind, so dass keine Vordefinition der Laserstrahlachse des Pumpmoduls erfolgt.

Der zum Betrieb des Diodenlaserstacks notwendige Stromanschluss wird bevorzugt über Flachkontakte realisiert, die entsprechende Kontaktflächen am Träger kontaktieren, wobei die notwendige Kraft zum Andrücken der Flachkontakte durch die Halteeinrichtung erzeugt wird.

Für den Kühlmittelanschluss und/oder den Spülgasanschluss sind vorzugsweise am Pumpmodul unverlierbare Dichtungen vorgesehen, die durch die Halteeinrichtung auf eine ebene Dichtfläche am Träger gedrückt werden. Die Dichtfläche für den Kühlmittelanschluss ist in einer bevorzugten Ausführungsform des Pumpmoduls am Pumpmodul und am Träger in gegenüber der Ebene der Stromversorgungs- und Datenanschlüsse tiefer liegenden Ebene angeordnet, so dass beim Wechsel des Pumpmoduls keine Kühlflüssigkeit auf die Elektronik und/oder die Optik gelangen kann.

Die Halteeinrichtung für das Pumpmodul umfasst bevorzugt mindestens einen Spannhebel, der am Träger oder am Pumpmodul gelagert ist und mit seinem freien Ende am Pumpmodul bzw. am Träger angreift. Vorzugsweise spannt der Spannhebel das Schwenklager des Pumpmoduls gegen das Gegenschwenklager des Trägers und die Anlagefläche des am Gegenschwenklager anliegenden Pumpmoduls in Anlage an die Anlagefläche des Trägers. Der Spannhebel kann ohne Werkzeug betätigt werden und spannt das Pumpmodul in definierter Raumlage an den Träger.

Besonderes bevorzugt weist der Träger mehrere, insbesondere fächerförmig, nebeneinander liegende Anlageflächen mit Gegenanschlüssen und Gegenschwenklagern zur Aufnahme jeweils eines Pumpmoduls auf. Dabei können die mehreren Anlageflächen entlang eines Kreisbogens angeordnet sein, in dessen Mittelpunkt eine Optik angeordnet ist, welche die Laserstrahlen aller am Träger befestigten Pumpmodule zu einem gemeinsamen Laserstrahl zusammenführt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung

Es zeigen:
- Fig. 1: eine Draufsicht auf die erfindungsgemäße Anordnung zur Befestigung mehrerer Pumpmodule an einem Träger;
- Fig. 2: eine Anlageseite des in Fig. 1 gezeigten Pumpmoduls; und
- Fig. 3: einen Schnitt der Befestigungsanordnung gemäß III-III in Fig. 1.

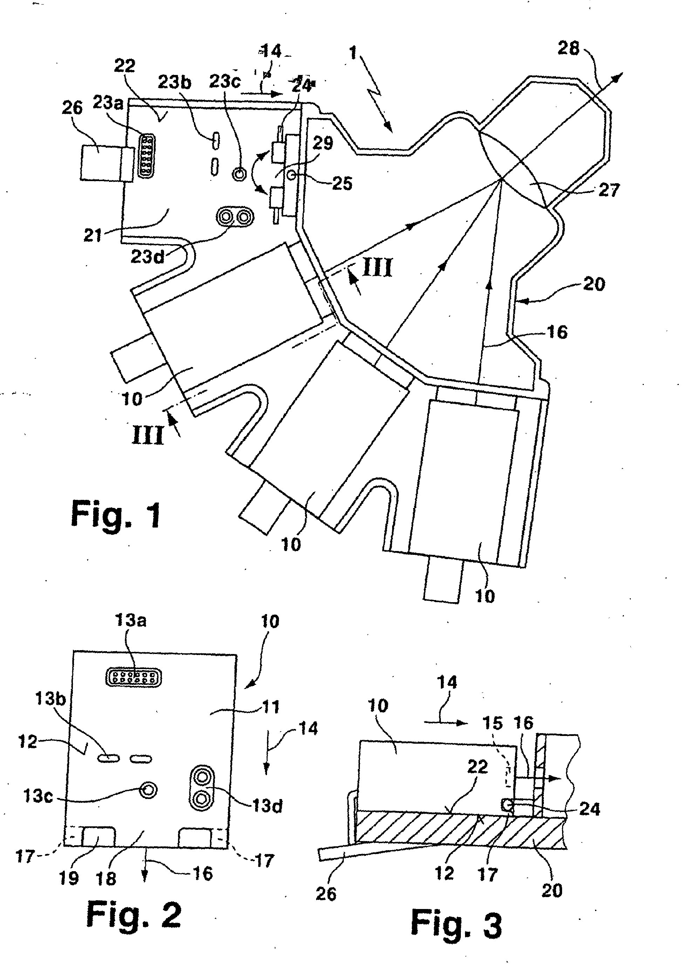

Die in **Fig. 1** gezeigte Anordnung **1** dient zur Befestigung von vier Pumpmodulen **10** an einem fächerförmigen Träger **20.** Die Pumpmodule 10 enthalten Diodenlaserstacks zum Pumpen eines Hochleistungsfestkörperlasers (nicht gezeigt). Die Diodenlaserstacks sind durch das Modulgehäuse vor Umwelteinflüssen (Spritzwasser, Staub, Berührung, mechanische Einflüsse) geschützt. Das Modulgehäuse ist so ausgelegt, dass der Diodenlaserstack mit Spülluft staubfrei, trocken und lösemittelfrei gehalten werden kann.

Wie in **Fig. 2** gezeigt, weist ein Pumpmodul 10 auf einer Anlageseite **11** eine ebene Anlagefläche **12** und Anschlüsse **13a-13d** sowie an seinem in einer Einschubrichtung **14** vorderen Ende ein Austrittsfenster **15 (Fig. 3)** für einen Laserstrahl **16** des Diodenlaserstacks und ein Schwenklager **17** auf. Das Schwenklager 17 ist durch zwei entgegen der Einschubrichtung 14 offene Lageraussparungen gebildet, die eine parallel zur Anlagefläche 12 und rechtwinklig zur Einschubrichtung 14 verlaufende Schwenkachse definieren. Zwischen den Lageraussparungen befindet sich ein zentraler Vorsprung **18,** der von den Lageraussparungen seitlich jeweils durch eine Aussparung **19** beabstandet ist. Das Austrittsfenster 15 kann offen oder mit einem Fenster z.B. in Form einer Linse oder einer planparallelen Platte verschlossen sein.

Der Träger 20 weist auf einer Anlageseite **21** für jedes Pumpmodul 10 eine ebene Anlagefläche **22** und Gegenanschlüsse **23a-23d** sowie an seinem in Einschubrichtung 14 vorderen Ende ein Gegenschwenklager **24** auf. Das Gegenschwenklager 24 ist durch zwei Achszapfen gebildet, die in Einschubrichtung 14 und im Abstand zur Anlagefläche 22 und/oder um die Achse **25** (Doppelpfeil) mittels Justierschrauben (nicht gezeigt) verstellbar sind. Zwischen den Achszapfen befindet sich eine Aussparung **29.** Am in Einschubrichtung 14 hinteren Ende des Trägers 20 ist eine Halteeinrichtung **26** in Form eines Spannhebels vorgesehen, der am Träger 20 gelagert ist und mit seinem freien Ende am Pumpmodul 10 angreift.

Um das Pumpmodul 10 am Träger 20 zu befestigen, wird das Pumpmodul 10 in Einschubrichtung 14 unter einem Winkel von ca. 5° bis ca. 30° zur Anlagefläche 22 an den Träger 20 herangeführt, bis das Schwenklager 17 am Gegenschwenklager 24 anliegt. Dabei greift der zentrale Vorsprung 18 am Pumpmodul 10 in die Aussparung 29 am Träger 20 ohne seitliches Spiel ein, so dass ein seitliches (d.h. axiales) Verschieben des am Gegenschwenklager 24 anliegenden Pumpmoduls 10 verhindert ist. Anschließend wird das Pumpmodul 10 mittels des Spannhebels um die Schwenkachse der Lager 17, 24 verdreht und gespannt, bis die Anlagefläche 12 des am Gegenschwenklager 24 anliegenden Pumpmoduls 10 unter Ausbildung einer Verbindung zwischen den Anschlüssen 13a-13d und den Gegenanschlüssen 23a-23d an der Anlagefläche 22 des Trägers 20 parallel anliegt.

Da das Gegenschwenklager 24 mit Hilfe eines Referenz-Pumpmoduls über die Justierschrauben bereits vorab auf eine vorbestimmte Position justiert wurde, entfällt ein Nachjustieren, wenn beim zu befestigenden Pumpmodul 10 die Hauptachsen seines Laserstrahls 16 gleich wie die Hauptachsen des Referenz-Pumpmoduls orientiert sind. Durch den Spannhebel wird eine Kraftkomponente in Richtung des austretenden Laserstrahls 16 induziert, mit der das Schwenklager 17 am Gegenschwenklager 24 anliegt. Durch den Spannhebel wird eine weitere Kraftkomponente in Richtung der Anlagefläche 22 des Trägers 20 induziert, mit der die Anlagefläche 12 an der Anlagefläche 22 des Trägers 20 anliegt.

Der zum Betrieb des Diodenlaserstacks notwendige Kühlanschluss ist über zwei Versorgungsleitungen realisiert. Diese beinhalten auf der Pumpmodulseite den Anschluss 13d mit zwei unverlierbaren Dichtungen, die durch die Schwenkbewegung beim Einstecken und Verriegeln des Pumpmoduls 10 auf ebene Dichtflächen der Gegenanschlüsse 23d des Trägers 20 drücken. Der für die Abdichtung notwendige Anpressdruck wird durch den Spannhebel aufgebracht. Die Dichtflächen der Gegenanschlüsse 23d sind am Träger in einer gegenüber der Ebene der Stromversorgungs- und Datenanschlüsse tiefer liegenden Ebene angeordnet, so dass beim Wechsel des Pumpmoduls keine Kühlflüssigkeit auf die Elektronik und/oder die Optik gelangen kann.

Der zum Betrieb des Diodenlaserstacks notwendige Stromanschluss wird pumpmodulseitig über zwei Flachkontakte 13b realisiert, die entsprechende Kontaktflächen 23b am Träger 20 kontaktieren. Die notwendige Kraft zum Andrücken der Flachkontakte 13b wird ebenfalls durch den Spannhebel erzeugt.

Der Datenaustausch wird über einen Stecker realisiert, dessen am Pumpmodul 10 oder am Träger 20 vorgesehenes Steckerteil 13a, 23a schwimmend gelagert ist, so dass keine Vordefinition der Strahlachse des austretenden Laserstrahls 16 erfolgt. Alternativ ist auch eine Realisierung der Datenverbiridung über Flachkontakte möglich.

Ein Spülluftanschluss wird pumpmodulseitig über eine Anschlussöffnung 13c mit einer Dichtung realisiert, auf die eine entsprechende Anschlussöffnung 23c des Trägers 20 drückt. Durch diese Gestaltung der Schnittstellen (mechanisch, elektrisch) und ihre Anordnung ausschließlich auf der Anlageseite 11 des Pumpmoduls 10 kann das Pumpmodul 10 ohne weitere Hilfsmittel gewechselt werden.

Die vier Anlageflächen 22 des Trägers 20 sind entlang eines Kreisbogens angeordnet, in dessen Mittelpunkt eine Optik **27** angeordnet ist, welche die Laserstrahlen 16 aller Pumpmodule 10 zu einem gemeinsamen Ausgangslaserstrahl **28** zum Pumpen des Hochleistungsfestkörperlasers zusammenführt.

## Patentansprüche

1. Anordnung (1) zur Befestigung mindestens eines Pumpmoduls (10), welches auf einer Anlageseite (11) eine Anlagefläche (12) und Anschlüsse (13a-13d) aufweist, an einem Träger (20), welcher auf einer Anlageseite (21) mindestens eine Anlagefläche (22) und Gegenanschlüsse (23a-23d) aufweist, wobei eine Halteeinrichtung (26) die Anlagefläche (12) des Pumpmoduls (10) in Anlage an der Anlagefläche (22) des Trägers (20) unter Ausbildung einer Verbindung zwischen Anschlüssen (13a-13d) und Gegenanschlüssen (23a-23d) hält.

2. Anordnung nach Anspruch 1, **dadurch gekennzeichnet, dass** das Pumpmodul (10) an seinem in einer Einschubrichtung (14) vorderen Ende sowohl ein Austrittsfenster oder eine Austrittsöffnung (15) für einen Laserstrahl (16) als auch ein Schwenklager (17) und der Träger (20) ein Gegenschwenklager (24) aufweist, an dem das Pumpmodul (10) im befestigten Zustand angreift.

3. Anordnung nach Anspruch 2, **dadurch gekennzeichnet, dass** das Schwenklager (17) des Pumpmoduls (10) von der Anlagefläche (12) des Pumpmoduls (10) beabstandet ist.

4. Anordnung nach Anspruch 2 oder 3, **dadurch gekennzeichnet, dass** das Schwenklager (17) des Pumpmoduls (10) durch ein oder mehrere entgegen der Einschubrichtung (14) offene Lageraussparungen und das Gegenschwenklager (24) des Trägers (20) durch einen oder mehrere Achszapfen gebildet ist.

5. Anordnung nach einem der Ansprüche 2 bis 4, **dadurch gekennzeichnet, dass** das Gegenschwenklager (24) des Trägers (20) in Einschubrichtung (14) und/oder im Abstand zur Anlagefläche (22) des Trägers (20) und/oder um eine Achse (25) rechtwinklig zur Anlagefläche (22) des Trägers (20) verstellbar ist.

6. Anordnung nach einem der vorhergehenden Ansprüche, **dadurch gekennzeichnet, dass** das Pumpmodul (10) an seinem in Einschubrichtung (14) vorderen Ende einen Vorsprung (18) und der Träger (20) eine entsprechende Aussparung (29) oder umgekehrt aufweisen, wobei Vorsprung (18) und Aussparung (29) im befestigten Zustand des Pumpmoduls (10) ohne seitliches Spiel ineinander greifen.

7. Anordnung nach einem der vorhergehenden Ansprüche, **dadurch gekennzeichnet, dass** die Anschlüsse (13a-13d) und Gegenanschlüsse (23a-23d) zur elektrischen Versorgung und/oder zur Kühlmittelversorgung und/oder zur Spülgasversorgung des Pumpmoduls (10) und/oder zur Datenübertragung vorgesehen sind.

8. Anordnung nach einem der vorhergehenden Ansprüche, **dadurch gekennzeichnet, dass** alle zur Versorgung des Pumpmoduls (10) erforderlichen Anschlüsse (13a-13d) und Gegenanschlüsse (23a-23d) auf den Anlageseiten (11, 21) des Pumpmoduls (10) und des Trägers (20) vorgesehen sind.

9. Anordnung nach einem der vorhergehenden Ansprüche, **dadurch gekennzeichnet, dass** ein Kühlmittelanschluss (13d) und/oder ein Spülgasanschluss (13c) des Pumpmoduls (10) mit unverlierbaren Dichtungen ausgebildet ist, die durch die Halteeinrichtung (26) auf ebene Dichtflächen des Gegenanschlusses (23d, 23c) gepresst werden.

10. Anordnung nach einem der vorhergehenden Ansprüche, **dadurch gekennzeichnet, dass** ein elektrischer Anschluss (13b) des Pumpmoduls (10) und ein entsprechender Gegenanschluss (23b) des Trägers (20) durch Flachkontakte gebildet sind.

11. Anordnung nach einem der vorhergehenden Ansprüche, **dadurch gekennzeichnet, dass** eine Datenaustauschverbindung zwischen Pumpmodul (10) und Träger (20) durch Steckerteile (13a, 23a) gebildet ist, die am Pumpmodul (10) und/oder am Träger (20) schwimmend gelagert sind.

12. Anordnung nach einem der vorhergehenden Ansprüche, **dadurch gekennzeichnet, dass** ein Kühlmittelanschluss (13d) des Pumpmoduls (10) auf der Anlageseite (11) in einer tiefer liegenden Ebene vorgesehen ist als Daten- und Stromversorgungsanschlüsse.

13. Anordnung nach einem der vorhergehenden Ansprüche, **dadurch gekennzeichnet, dass** die Halteeinrichtung (26) einen oder mehrere Spannhebel umfasst, welche die Anlagefläche (12) des Pumpmoduls (10) in Anlage an die Anlagefläche (22) des Trägers (20) spannen.

14. Anordnung nach Anspruch 13, **dadurch gekennzeichnet, dass** die Halteeinrichtung (26) einen Spannhebel aufweist, der das Schwenklager (17) des Pumpmoduls (10) in Einschubrichtung (14) gegen das Gegenschwenklager (24) des Trägers (20) sowie die Anlagefläche (12) des am Gegenschwenklager (24) anliegenden Pumpmoduls (10) in Anlage an die Anlagefläche (22) des Trägers (20) spannt.

15. Anordnung nach Anspruch 13 oder 14, **dadurch gekennzeichnet, dass** der Spannhebel am Träger (20) gelagert ist und mit seinem freien Ende am Pumpmodul (10) angreift oder umgekehrt.

16. Anordnung nach einem der vorhergehenden Ansprüche, **dadurch gekennzeichnet, dass** der Träger (20) mehrere, insbesondere fächerförmig, nebeneinander liegende Anlageflächen (22) mit Gegenanschlüssen (23a-23d) und Gegenschwenklagern (24) zur Aufnahme jeweils eines Pumpmoduls (10) aufweist.

17. Anordnung nach Anspruch 16, **dadurch gekennzeichnet, dass** die mehreren Anlageflächen (22) entlang eines Kreisbogens angeordnet sind und etwa im Mittelpunkt des Kreisbogens eine Optik (27) angeordnet ist, welche die Laserstrahlen (16) aller am Träger (20) befestigten Pumpmodule (10) zu einem gemeinsamen Laserstrahl (28) zusammenführt.

## Claims

1. Arrangement (1) for securing at least one pump module (10), which has an abutment face (12) and connections (13a-13d) at an abutment side (11), to a carrier (20) which has at least one abutment face (22) and counter-connections (23a-23d) at an abutment side (21), a holding device (26) holding the abutment face (12) of the pump module (10) in abutment against the abutment face (22) of the carrier (20), with a connection being formed between connections (13a-13d) and counter-connections (23a-23d).

2. Arrangement according to claim 1, **characterised in that** the pump module (10) has, at the front end thereof in an insertion direction (14), both an outlet aperture or an outlet opening (15) for a laser beam (16) and a pivot bearing (17), and the carrier (20) has a counter-pivot bearing (24), with which the pump module (10) engages in the secured state.

3. Arrangement according to claim 2, **characterised in that** the pivot bearing (17) of the pump module (10) is spaced-apart from the abutment face (12) of the pump module (10).

4. Arrangement according to claim 2 or 3, **characterised in that** the pivot bearing (17) of the pump module (10) is formed by one or more bearing recesses which are open counter to the insertion direction (14) and the counter-pivot bearing (24) of the carrier (20) is formed by one or more axle pins.

5. Arrangement according to any one of claims 2 to 4, **characterised in that** the counter-pivot bearing (24) of the carrier (20) can be adjusted in the insertion direction (14) and/or with spacing relative to the abutment face (22) of the carrier (20) and/or about an axis (25) at right-angles to the abutment face (22) of the carrier (20).

6. Arrangement according to any one of the preceding claims, **characterised in that** the pump module (10) has a projection (18) at the front end thereof in the insertion direction (14) and the carrier (20) has a corresponding recess (29), or vice versa, the projection (18) and recess (29) engaging one in the other without lateral play when the pump module (10) is in the secured state.

7. Arrangement according to any one of the preceding claims, **characterised in that** the connections (13a-13d) and counter-connections (23a-23d) are provided for supplying electrical power and/or for supplying coolant and/or for supplying circulation gas for the pump module (10) and/or for transmitting data.

8. Arrangement according to any one of the preceding claims, **characterised in that** all the connections (13a-13d) and counter-connections (23a-23d) necessary for supplying the pump module (10) are provided at the abutment sides (11, 21) of the pump module (10) and the carrier (20).

9. Arrangement according to any one of the preceding claims, **characterised in that** a coolant connection (13d) and/or a circulation gas connection (13c) of the pump module (10) is/are constructed so as to have captive seals which are pressed on planar sealing faces of the counter-connection (23d, 23c) by the holding device (26).

10. Arrangement according to any one of the preceding claims, **characterised in that** an electrical connection (13b) of the pump module (10) and a corresponding counter-connection (23b) of the carrier (20) are formed by flat contacts.

11. Arrangement according to any one of the preceding claims, **characterised in that** a data exchange connection is constructed between the pump module (10) and the carrier (20) by plug type elements (13a, 23a) which are supported in a floating manner on the pump module (10) and/or on the carrier (20).

12. Arrangement according to any one of the preceding claims, **characterised in that** a coolant connection (13d) of the pump module (10) is provided at the abutment side (11) in a plane which is located at a lower level than data and electrical power supply connections.

13. Arrangement according to any one of the preceding claims, **characterised in that** the holding device (26) comprises one or more clamping levers which clamp the abutment face (12) of the pump module (10) in abutment against the abutment face (22) of the carrier (20).

14. Arrangement according to claim 13, **characterised in that** the holding device (26) has a clamping lever which clamps the pivot bearing (17) of the pump module (10) in the insertion direction (14) against the counter-pivot bearing (24) of the carrier (20) and the abutment face (12) of the pump module (10), which adjoins the counter-pivot bearing (24), in abutment against the abutment face (22) of the carrier (20).

15. Arrangement according to claim 13 or 14, **characterised in that** the clamping lever is supported on the carrier (20) and engages with the pump module (10) by means of the free end thereof, or vice versa.

16. Arrangement according to any one of the preceding claims, **characterised in that** the carrier (20) has a plurality of abutment faces (22), which are located beside each other, in particular in a fan-like manner, having counter-connections (23a-23d) and counter-pivot bearings (24) for receiving a respective pump module (10).

17. Arrangement according to claim 16, **characterised in that** the plurality of abutment faces (22) are arranged along a circular arc and an optical unit (27) is arranged approximately at the centre of the circular arc and combines the laser beams (16) from all the pump modules (10) secured to the carrier (20) in order to form a common laser beam (28).

## Revendications

1. Agencement (1) de fixation d'au moins un module de pompage (10), lequel présente sur une face d'appui (11) une surface d'appui (12) et des raccords (13a-13d), sur un support (20) qui présente sur une face d'appui (21) au moins une surface d'appui (22) et des contre-raccords (23a-23d), un dispositif de retenue (26) maintenant la surface d'appui (12) du module de pompage (10) en appui sur la surface d'appui (22) du support (20) en créant une liaison entre les raccords (13a-13d) et les contre-raccords (23a-23d).

2. Agencement selon la revendication 1, **caractérisé par le fait que** le module de pompage (10) présente, à son extrémité avant dans un sens d'insertion (14), aussi bien une fenêtre de sortie ou une ouverture de sortie (15) pour un faisceau laser (16) qu'un palier pivotant (17) et que le support (20) présente un contre-palier pivotant (24) sur lequel le module de pompage (10) est en prise dans l'état fixé.

3. Agencement selon la revendication 2, **caractérisé par le fait que** le palier pivotant (17) du module de pompage (10) est à distance de la surface d'appui (12) du module de pompage (10).

4. Agencement selon la revendication 2 ou 3, **caractérisé par le fait que** le palier pivotant (17) du module de pompage (10) est formé par un ou plusieurs évidements de palier ouverts à l'opposé du sens d'insertion (14) et que le contre-palier pivotant (24) du support (20) est formé par un ou plusieurs tourillons.

5. Agencement selon l'une des revendications 2 à 4, **caractérisé par le fait que** le contre-palier pivotant (24) du support (20) est déplaçable dans le sens d'insertion (14) et/ou à distance par rapport à la surface d'appui (22) du support (20) et/ou autour d'un axe (25) perpendiculaire à la surface d'appui (22) du support (20).

6. Agencement selon l'une des revendications précédentes, **caractérisé par le fait que** le module de pompage (10), présente à son extrémité avant dans le sens d'insertion (14), une partie en saillie (18) et que le support (20) présente un évidement correspondant (29) ou inversement, la partie en saillie (18) et l'évidement (29) se mettant en prise l'une dans l'autre sans jeu latéral dans l'état fixé du module de pompage (10).

7. Agencement selon l'une des revendications précédentes, **caractérisé par le fait que** les raccords (13a-13d) et les contre-raccords (23a-23d) sont prévus pour l'alimentation électrique et/ou pour l'alimentation en liquide de refroidissement et/ou pour l'alimentation en gaz de balayage du module de pompage (10) et/ou pour la transmission de données.

8. Agencement selon l'une des revendications précédentes, **caractérisé par le fait que** tous les raccords (13a-13d) et contre-raccords (23a-23d) nécessaires pour l'alimentation du module de pompage (10) sont prévus sur les faces d'appui (11, 21) du module de pompage (10) et du support (20).

9. Agencement selon l'une des revendications précédentes, **caractérisé par le fait qu'**il est formé un raccord de liquide de refroidissement (13d) et/ou un raccord de gaz de balayage (13c) du module de pompage (10) avec des joints imperdables qui sont pressés par le dispositif de retenue (26) sur des surfaces d'étanchéité planes du contre-raccord (23d, 23c).

10. Agencement selon l'une des revendications précédentes, **caractérisé par le fait qu'**un raccord électrique (13b) du module de pompage (10) et un contre-raccord correspondant (23b) du support (20) sont formés par des contacts plats ou plans.

11. Agencement selon l'une des revendications précédentes, **caractérisé par le fait qu'**une liaison d'échange de données entre module de pompage (10) et support (20) est formée par des pièces enfichables (13a, 23a) qui sont montées flottantes sur le module de pompage (10) et/ou sur le support (20).

12. Agencement selon l'une des revendications précédentes, **caractérisé par le fait qu'**un raccord de liquide de refroidissement (13d) du module de pompage (10) est prévu sur la face d'appui (11) dans un plan situé plus bas que les raccords de données et d'alimentation électrique.

13. Agencement selon l'une des revendications précédentes, **caractérisé par le fait que** le dispositif de retenue (26) comprend un ou plusieurs leviers de serrage qui serrent la surface d'appui (12) du module de pompage (10) en appui sur la surface d'appui (22) du support (20).

14. Agencement selon la revendication 13, **caractérisé par le fait que** le dispositif de retenue (26) présente un levier de serrage qui serre le palier pivotant (17) du module de pompage (10) dans le sens d'insertion (14) contre le contre-palier pivotant (24) du support (20) ainsi que la surface d'appui (12) du module de pompage (10) reposant sur le contre-palier pivotant (24) en appui sur la surface d'appui (22) du support (20).

15. Agencement selon la revendication 13 ou 14, **caractérisé par le fait que** le levier de serrage est monté sur le support (20) et est en prise sur le module de pompage (10) par son extrémité libre ou inversement.

16. Agencement selon l'une des revendications précédentes, **caractérisé par le fait que** le support (20) présente plusieurs surfaces d'appui (22) disposées côte à côte, en particulier en éventail, munies de contre-raccords (23a-23d) et de contre-paliers pivotants (24) pour la réception de chaque fois un module de pompage (10).

17. Agencement selon la revendication 16, **caractérisé par le fait que** les plusieurs surfaces d'appui (22) sont disposées le long d'un arc de cercle et qu'une optique (27) qui réunit les faisceaux laser (16) de tous les modules de pompage (10) fixés sur le support (20) en un faisceau laser commun (28) est disposée à peu près au centre de l'arc de cercle.
